# EUROPÄISCHE PATENTSCHRIFT

(11) **EP 1 789 600 B1**
(45) Veröffentlichungstag und Bekanntmachung des Hinweises auf die Patenterteilung: **30.05.2012**
(21) Anmeldenummer: 05773241.4
(22) Anmeldetag: 04.08.2005
(51) Int. Cl.: C23C 4/02, C23C 4/08, C04B 41/87, C04B 41/52, C04B 35/00

(54) **VERFAHREN ZUR HERSTELLUNG DÜNNER, DICHTER KERAMIKSCHICHTEN**
METHOD FOR THE PRODUCTION OF THIN DENSE CERAMIC LAYERS
PROCEDE POUR REALISER DES COUCHES CERAMIQUES FINES ET COMPACTES

(30) Priorität: 13.09.2004 DE 102004044597
(43) Veröffentlichungstag der Anmeldung: 30.05.2007
(73) Patentinhaber: Forschungszentrum Jülich GmbH, 52425 Jülich (DE)
(72) Erfinder: VASSEN, Robert, 52134 Herzogenrath (DE); HATHIRAMANI, Dag, 17489 Greifswald (DE); STÖVER, Detlev, 52382 Nierderzier (DE)
(86) Internationale Anmeldenummer: PCT/DE2005/001380
(87) Internationale Veröffentlichungsnummer: WO 2006/029587

(56) Entgegenhaltungen:
- WO-A2-02/19455
- US-B1- 6 306 517
- OLEG PAVLOVICH SOLONENKO: "THEORETICAL MODELLING AND EXPERIMENTAL STUDY OF THERMAL BARRIER COATINGS" MATERIALS TRANSACTIONS, Bd. 44, 11. November 2003 (2003-11-11), Seiten 2311-2321, XP008055452 japan
- FAUCHAIS P ET AL: "Plasma Spray: Study of the Coating Generation" 1996, CERAMICS INTERNATIONAL, ELSEVIER, AMSTERDAM, NL, PAGE(S) 295-303 , XP004040497 ISSN: 0272-8842 das ganze Dokument
- J. R. FINCKE; W. D. SWANK: "SIMULTANEOUS MEASUREMENT OF PARTICLE SIZE, VELOCITY, AND TEMPERATURE IN THERMAL PLASMAS" IEEE TRANSACTIONS ON PLASMA SCIENCE, Bd. 18, Nr. 6, Dezember 1990 (1990-12), Seiten 948-957, XP008055500
- BOUNAZEF M ET AL: "Effect of APS process parameters on wear behaviour of alumina-titania coatings" MATERIALS LETTERS, NORTH HOLLAND PUBLISHING COMPANY. AMSTERDAM, NL, Bd. 58, Nr. 20, August 2004 (2004-08), Seiten 2451-2455, XP004515866 ISSN: 0167-577X
- S. SAMPATH; X.Y. JIANG: "SUBSTRATE TEMPERATURE EFFECTS ON SPLAT FORMATION, MICROSTRUCTURE DEVELOPMENT AND PROPERTIES OF PLASMA SPRAYED COTAINGS PART. I: CASE STUDY FOR PSZ" MATERIALS SCIENCE AND ENGINEERING A, Bd. 272, 15. November 1990 (1990-11-15), Seiten 181-188, XP002354070

## Beschreibung

Die Erfindung betrifft ein verfahren zur Herstellung von Keramikschichten, insbesondere von Keramikschichten mit einer Dicke unterhalb von 100 µm, die gasdicht ausgestaltet sind.

### Stand der Technik

Zur Herstellung dünner Schichten auf einem Substrat haben sich Spritztechniken, insbesondere das atmosphärische Plasmaspritzen als sehr geeignet herausgestellt.

Beim atmosphärischen Plasmaspritzen (APS) werden Spritzzusätze in Form von Partikeln oder Suspensionen mit Hilfe eines Plasmastrahls auf die zu beschichtende Oberfläche eines Substrats aufgebracht. Ein Plasma ist ein heißes Gas, in dem aufgrund der hohen Temperatur die neutralen Teilchen dissoziieren und ionisieren. Somit befinden sich, im Vergleich zum Gas, auch geladene Teilchen wie Elektronen und Ionen in einem Plasma.
Zur Erzeugung eines Plasmas wird im so genannten Plasmabrenner durch eine Hochfrequenzzündung ein Lichtbogen zwischen Kathode und Anode erzeugt. Bei entsprechend gewählter Gaszufuhr bildet sich ein Plasmastrahl mit hohem Wärmeinhalt, der mit hoher Geschwindigkeit gebündelt aus der Düse des Plasmabrenners ausströmt. Die im heißesten Teil des Plasmakegels auftretenden Temperaturen erreichen bis über 20000 K. Nach Einbringen des Pulvers, bzw. der Suspension erfolgt ein Wärme- und Impulsübertrag auf die Pulverpartikel, wodurch diese geschmolzen und beschleunigt werden. In Abhängigkeit der gewählten Parameter treffen die Pulverpartikel mit einer gewissen Geschwindigkeit und Temperatur auf das Substrat auf.

Die richtige Einstellung der Spritzparameter ist entscheidend für die Qualität und den Wirkungsgrad der mit APS erzeugten Schicht. Einzustellende Verfahrensparameter sind dabei insbesondere die Durchflussmenge und die Zusammensetzung für das Plasmagas und das Pulverträgergas, Strom, Spannung, Pulvermenge und Partikelgeschwindigkeit und -temperatur, sowie Substrattemperatur und ferner Spritzabstände und Relativgeschwindigkeit zwischen Plasmabrenner und Substrat.

Atmosphärisch plasmagespritzte Keramikschichten besitzen in aller Regel eine Vielzahl von porenartigen Strukturen, die sich in zwei unterschiedliche Arten gliedern lassen: Risse, sowie grobe, meist globulare Poren.

Bei den Rissen wiederum kann man so genannte Segmentierungsrisse und Mikrorisse unterscheiden. Erstere laufen parallel zur Beschichtungsrichtung durch mehrere Spritzlamellen, und zum Teil sogar durch die ganze Schicht. Die Breite der Rissöffnung liegt typischerweise deutlich über einem Mikrometer. Die Mikrorisse befinden sich zwischen den Lamellen (interlamellar) oder in den Lamellen (intralamellar) und besitzen deutlich geringere Rissöffnungsbreiten typischerweise unter einem Mikrometer. Die Mikrorisse sind netzwerkartig miteinander verbunden und haben eine Gasdurchlässigkeit der Schicht zur Folge. Ebenso wird die Gasdurchlässigkeit durch die globularen Poren und Segmentierungsrisse, besonders solche, die durch die gesamte Schicht laufen, gefördert.

Bei heutigen nach dem Stand der Technik hergestellten APS-Schichten lassen sich diese porenartigen Strukturen nicht soweit unterdrücken, dass regelmäßig von gasdichten Schichten gesprochen werden kann. Insbesondere ist die Herstellung gasdichter Schichten mit Leckraten unter 10⁻¹ mbar L/(cm² s) ohne zusätzliche thermische Nachbehandlung bislang nicht realisierbar.

### Aufgabe und Lösung

Die Aufgabe der Erfindung ist es, ein Verfahren zur Herstellung dünner und gleichzeitig gasdichter Keramikschichten auf einem Substrat zur Verfügung zu stellen, die insbesondere ohne zusätzliche thermische Nachbehandlung eine Leckrate von weniger als 10⁻¹ mbar L/(cm² s) aufweisen.

Die Aufgabe der Erfindung wird gelöst durch ein Verfahren mit der Gesamtheit an Merkmalen gemäß Hauptanspruch. Vorteilhafte Ausgestaltungen des Verfahrens finden sich in den auf diesen rückbezogenen Ansprüchen.

### Gegenstand der Erfindung

Die Aufgabe der Erfindung wird durch ein atmosphärisches Plasmaspritzverfahren gelöst, bei welchem eine Reihe von speziellen Parametern während der Durchführung des Verfahrens eingestellt werden. Die Kombination dieser Parametern bewirkt, dass eine dünne Keramikschicht, insbesondere eine solche mit einer Schichtdicke unterhalb von 100 µm, auf einem Substrat abgeschieden wird, die vorteilhaft gasdicht und eine Leckrate unterhalb von 10⁻¹ mbar L/(cm² s) aufweist.

Im folgenden sind die dazu notwendigen Parameter für das atmosphärische Plasmaspritzverfahren (APS) aufgeführt, die zur Erzielung der vorgenannten Wirkung führen.
1. Herstellung der Schichten in einem Beschichtungsübergang (nur eine Lage). Das bedeutet, der Plasmabrenner überfährt das Substrat während der Beschichtung nur ein einziges Mal. Die Verwendung nur eines Überganges reduziert die Neigung zur Rissbildung zwischen den unterschiedlichen Spritzlagen. Dies steht im Gegensatz zur konventionellen Technik, bei der regelmäßig mehrere Übergänge benutzt werden.
2. Einstellung der abzuscheidenden Schichtdicke bis etwa maximal 100 µm. Dies vermeidet die Erzeugung von Segmentierungsrissen.
3. Vorheizen des Substrates auf hohe Temperaturen von wenigstens 25 % der Schmelztemperatur der verwendeten Keramik in Kelvin. Diese Maßnahme verbessert die Haftung zwischen den einzelnen Spritzlamellen zum Teil durch Wiederaufschmelzen der bereits abgeschiedenen Partikel.
4. Einstellung von hohen Partikelgeschwindigkeiten beim Auftreffen auf das Substrat mit Werten über 200 m/s, insbesondere über 250 m/s durch entsprechende Wahl der Prozessparameter. Damit erzeugt man dünne Spritzlamellen, die eine geringere Neigung zur Mikrorissbildung zeigen.
5. Einstellung hoher Partikeltemperaturen beim Auftreffen auf das Substrat mit Werten von wenigstens 5 %, besser 10 % oberhalb der Schmelztemperatur durch entsprechende Wahl der Parameter. Dies fördert das Wiederaufschmelzen und den Verbund, das bedeutet, es unterdrückt die Mikrorissbildung.

Die vorgenannten Prozessparameter lassen sich teilweise durch die Geometrie des Plasmabrenners zur Substratoberfläche realisieren. So kann die Einstellung der Parameter gemäß den Punkten 4 und 5 in aller Regel vorteilhaft durch die Verwendung nicht zu großer Spritzabstände, das heißt typischerweise unterhalb von 150 mm realisiert werden.

Ferner erleichtert die Wahl des Spritzzusatzes in Form von feinen, jedoch noch fließfähigen Partikel mit d₅₀- Werten unter 50 µm, vorteilhaft sogar unter 30 µm, die Einstellung einer hohen Dichte in der abzuscheidenden Schicht.

Die Robotergeschwindigkeit und die Pulverförderrate werden so gewählt, dass mit einem einzigen Übergang eine entsprechend dichte Schicht mit einer Schichtdicke von weniger als 100 µm erzeugt wird. Günstige Robotergeschwindigkeiten liegen zwischen 50 und 500 mm/s.

Als geeignete Materialien für das vorgenannte Verfahren haben sich insbesondere keramische Materialien, die einen Schmelzpunkt besitzen, wie beispielsweise Zirkonoxid, auch mit Stabilisatorzusätzen, Perowskite, Pyrochlore, Aluminate, Aluminiumoxid, Spinelle, Borkarbide, Titankarbide u. a. herausgestellt.

Das erfindungsgemäße Verfahren lässt sich leicht auf die Herstellung verschiedener Schichten anwenden, insbesondere für dichte Elektrolytschichten für die Hochtemperatur-Brennstoffzelle, Membranen für Gas- Trenntechnologien sowie für Oxidations- oder Korrosions-Schutzschichten

### Spezieller Beschreibungsteil

Nachfolgend wird der Gegenstand der Erfindung anhand einer Figur sowie zweier Ausführungsbeispiele näher erläutert, ohne dass der Gegenstand der Erfindung dadurch beschränkt wird.

### A) Elektrolytschichten für die Hochtemperatur-Brennstoffzelle

Poröse, mit einer Anode versehene Substrate werden mit dem Plasmabrenner auf Temperaturen von ca. 500 °C vorgeheizt. Als Plasmabrenner kann z. B. der TRIPLEX II - oder der F4 - Brenner von Sulzer Metco zum Einsatz kommen. Leistung und Prozessgasströme werden so hoch gewählt, dass hohe Prozessgasgeschwindigkeiten und -temperaturen entstehen. Als Pulver kommt ein geschmolzen gebrochenes, voll-Yttrium-stabilisiertes Zirkonoxid (YSZ) mit einem d₅₀-Wert von 20 µm zum Einsatz. Die Partikelgeschwindigkeiten liegen beim Auftreffen auf das Substrat bei über 300 m/s, die Temperaturen über 3000 °C. Der Spritzabstand beträgt 90 mm. Die Substrattemperaturen während der Beschichtung erreichen etwa 800 °C. Die Robotergeschwindigkeit und die Pulverförderrate werden so gewählt, dass mit einem Übergang eine dichte, ca. 90 µm dicke YSZ-Schicht erzeugt wird. Die dafür eingestellte Robotergeschwindigkeit liegt bei 150 mm/s.

Die so hergestellte YSZ-Schicht weist regelmäßig eine Leckrate von weniger als 10⁻² mbar L/(cm² s) auf.

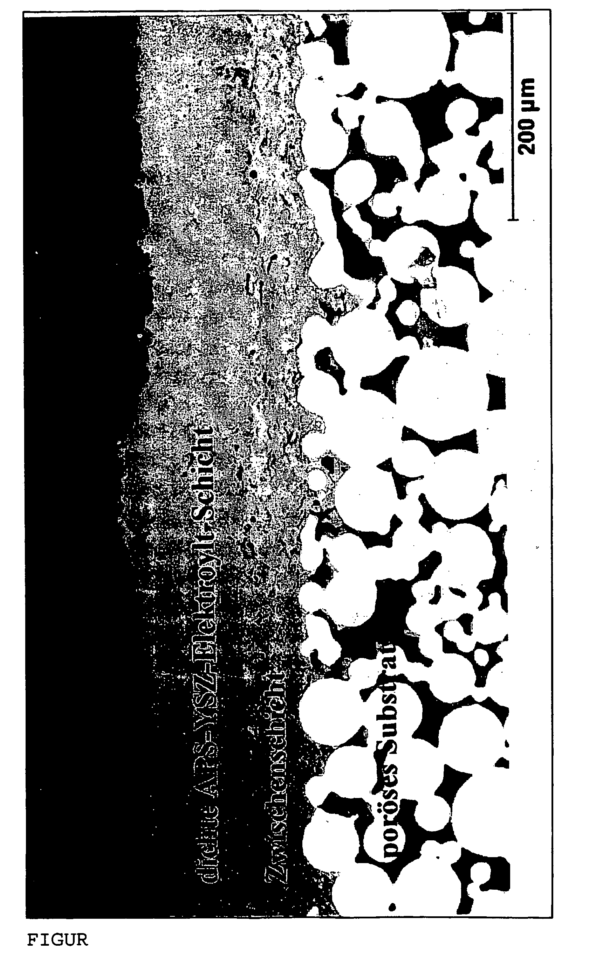

Die Figur zeigt den Schichtaufbau des vorgenannten Ausführungsbeispiels mit einem porösen Substrat, einer darauf angeordneten Zwischenschicht und einer auf dieser angeordneten dichten YSZ-Elektrolytschicht, welche durch das erfindungsgemäße APS-Verfahren aufgebracht wurde.

### B) Korrosionsschutzschichten für Faserverbundwerkstoffe

Faserverbundwerkstoffe aus CFC-Materialien (Carbon Fibre Composite) werden mit einer Mullitschicht versehen, die noch Risse aufweist. Diese Schicht wird mit einer weiteren, gasdichten Schicht aus La₂Hf₂O₇ nach der hier dargelegten Erfindung beschichtet, um einen Angriff von korrosiven oder oxidierenden Gasatmosphären sowohl auf das Substrat als auch auf die Mullitschicht zu verhindern. Alternativ kann eine keramische Zwischenlage eingefügt werden, die Reaktionen zwischen Mullit und La₂Hf₂O₇ unterdrückt.

Zur Herstellung der dichten La₂Hf₂O₇-Schicht wird sprühgetrocknetes Pulver mit einem d₅₀-Wert ca. 30 µm verwendet. Beim Vorheizen wird das Substrat mit dem Brenner (TRIPLEX II, F4, oder leistungsstärkere Brennervarianten) auf 400 °C vorgeheizt. Die Partikelgeschwindigkeit liegt bei ca. 210 m/s bei Temperaturen um 2900 °C. Die erzielte Schichtdicke ergibt sich zu etwa 35 µm.

## Patentansprüche

1. Verfahren zur Herstellung einer dünnen, dichten Keramikschicht auf einem Substrat, bei dem die Schicht mit Hilfe des atmosphärischen Plasmaspritzens aufgebracht wird, mit den Schritten,
- das Substrat wird auf eine Temperatur vorgeheizt, die wenigstens einem Viertel der Schmelztemperatur der aufzubringenden Keramik in Kelvin entspricht,
- als Spritzzusatz wird ein keramisches Pulver oder eine keramische Pulvermischung mit d₅₀-Werten unterhalb von 50 µm eingesetzt,
- es wird ein Spritzabstand unterhalb von 150 mm eingestellt, so dass sich Partikelgeschwindigkeiten von mehr als 200 m/s beim Auftreffen auf das Substrat einstellen und die Partikel beim Auftreffen auf der Substratoberfläche eine Temperatur aufweisen, die wenigstens 5 % über der Schmelztemperatur der aufzubringenden Keramik in Kelvin liegt,
- die Überfahrgeschwindigkeit des Plasmabrenners wird zwischen 50 und 500 mm/s eingestellt und die Menge des Spritzzusatzes derart gewählt, dass sich beim einmaligen Überfahren eine Schichtdicke von weniger als 100 µm einstellt,
so dass durch einmaliges Überfahren eine gasdichtkeramische Schicht auf dem Substrat erzeugt wird, die eine Leckrate von weniger als 10⁻¹ mbar L/(cm² s) aufweist.

2. Verfahren nach vorhergehendem Anspruch 1, bei dem als Spritzusatz ein keramisches Pulver oder eine keramische Pulvermischung mit d₅₀-Werten unterhalb von 30 µm eingesetzt wird.

3. Verfahren nach einem der vorhergehenden Ansprüche 1 bis 2, bei dem das Pulver in Form einer Suspension in die Plasmaflamme eingebracht wird.

4. Verfahren nach einem der vorhergehenden Ansprüche 1 bis 3, bei dem Partikelgeschwindigkeiten von mehr als 250 m/s beim Auftreffen auf das Substrat eingestellt werden.

5. Verfahren nach einem der vorhergehenden Ansprüche 1 bis 4, bei dem Partikeltemperaturen eingestellt werden, so dass die Partikel beim Auftreffen auf die Substratoberfläche eine Temperatur aufweisen, die wenigstens 10 % über der Schmelztemperatur der aufzubringenden Keramik in Kelvin liegt.

## Claims

1. Method for the production of a thin, dense ceramic layer on a substrate, in which the layer is applied using atmospheric plasma spray with the steps
- the substrate is preheated to a temperature corresponding to at least a quarter of the fusion temperature of the ceramic to be applied in Kelvin,
- a ceramic powder or a ceramic powder mixture with d₅₀-values below 50 µm is used as a spray additive,
- a spraying distance of less than 150 mm is set so that particle speeds of more than 200 m/s on hitting the substrate are set and on hitting the substrate the particles have a temperature at least 5% above the fusion temperature of the ceramic to be applied in Kelvin,
- the crossing speed of the plasma burner is set between 50 and 500 mm/s and the amount of spray additive is selected in such a way that with a single crossing a layer thickness of less than 100 µm is set,
so that with a single crossing a gastight ceramic layer is produced on the substrate with a leakage rate of less than 10⁻¹ mbar L/(cm²S).

2. Method according to previous claim 1, in which a ceramic powder or a ceramic powder mixture with d₅₀-values below 30 µm is used as a spray additive.

3. Method according to previous claims 1 to 2, in which the powder is put into the plasma flame in the form of a suspension.

4. Method according to one of previous claims 1 to 3, in which particle speeds of more than 250 m/s on hitting the substrate are set.

5. Method according to one of previous claims 1 to 4, in which particle temperatures are set so that on hitting the substrate the particles have a temperature at least 10% above the fusion temperature of the ceramic to be applied in Kelvin.

## Revendications

1. Procédé de production d'une couche céramique fine et compacte sur un substrat, dans lequel la couche est appliquée par pulvérisation à plasma atmosphérique, comportant les étapes suivantes :
- le substrat est préchauffé à une température qui correspond au moins à un quart de la température de fusion en Kelvin de la céramique à appliquer,
- comme additif de pulvérisation, on utilise une poudre de céramique ou un mélange de poudres de céramique présentant des valeurs d₅₀ inférieures à 50 µm,
- un intervalle de pulvérisation inférieur à 150 mm est ajusté de sorte les vitesses des particules s'ajustent plus de 200 m/s lorsqu'elles rencontrent le substrat et les particules, lors de la rencontre sur la surface du substrat, présentent une température qui se situe à moins de 5 % au-dessus de la température de fusion en Kelvin de la céramique à appliquer,
- la vitesse de course de la torche à plasma est réglée entre 50 et 500 mm/s et la quantité d'additif de pulvérisation est choisie de telle sorte que lors d'un passage unique, une épaisseur de couche inférieure à 100 µm s'ajuste,
de sorte que par un passage unique, une couche céramique étanche aux gaz soit générée sur le substrat, qui présente un taux de fuite inférieur à 10⁻¹ mbar L/(Cm² s).

2. Procédé selon la revendication 1 précédente, dans lequel on utilise comme additif de pulvérisation, une poudre de céramique ou un mélange de poudres de céramique présentant des valeurs d₅₀ inférieures à 30 µm.

3. Procédé selon l'une quelconque des revendications 1 à 2 précédentes, dans lequel la poudre est intégrée sous forme d'une suspension dans la flamme à plasma.

4. Procédé selon l'une quelconque des revendications 1 à 3 précédentes, dans lequel les vitesses de particules de plus de 250 m/s sont ajustées lorsqu'elles rencontrent le substrat.

5. Procédé selon l'une quelconque des revendications 1 à 4 précédentes, dans lequel les températures de particules sont ajustées de telle sorte que les particules présentent lorsqu'elles rencontrent la surface du substrat, une température qui est de moins de 10 % au-dessus de la température de fusion en Kelvin de la céramique à appliquer.
